# EUROPÄISCHE PATENTSCHRIFT

(11) **EP 3 000 294 B1**
(45) Veröffentlichungstag und Bekanntmachung des Hinweises auf die Patenterteilung: **21.11.2018**
(21) Anmeldenummer: 15177247.2
(22) Anmeldetag: 17.07.2015
(51) Int. Cl.: A01B 63/112

(54) **DYNAMISCH REGELBARE ACHSLASTVERTEILUNG FÜR EINE LANDWIRTSCHAFTLICHE ARBEITSMASCHINE**
DYNAMICALLY ADJUSTABLE AXLE LOAD DISTRIBUTION FOR AN AGRICULTURAL WORK MACHINE
RÉPARTITION DE CHARGES SUR LES ESSIEUX RÉGLABLE DYNAMIQUEMENT POUR UN ENGIN AGRICOLE

(30) Priorität: 01.09.2014 DE 102014112534
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Pickert, Heinz, 33397 Rietberg (DE)

(56) Entgegenhaltungen:
- EP-A1- 1 068 780
- WO-A1-2013/013917

## Beschreibung

Die vorliegende Erfindung betrifft eine landwirtschaftliche Arbeitsmaschine mit einer dynamischen Regelung der Achslastverteilung, sowie ein Verfahren zur dynamischen Regelung der Achslastverteilung einer landwirtschaftlichen Arbeitsmaschine.

Landwirtschaftliche Arbeitsmaschinen, beispielsweise Traktoren, werden zu unterschiedlichen Arbeiten auf Feldern eingesetzt und zudem oftmals für Transportaufgaben eingesetzt, beispielsweise mit einem angehängten Transportanhänger. Für die Bearbeitung eines Feldes ist eine Vielzahl an unterschiedlichen Arbeitsgeräten bekannt, welche an der landwirtschaftlichen Arbeitsmaschine zur Feldbearbeitung befestigt werden können. Zur Aufnahme und Befestigung eines Arbeitsgerätes an einer landwirtschaftlichen Arbeitsmaschine sind verschiedene Anhängevorrichtungen bekannt, welche ein verhältnismäßig einfaches Verbinden des Arbeitsgerätes mit der landwirtschaftlichen Arbeitsmaschine ermöglichen. Eine solche, besonders vielseitig anwendbare Anhängevorrichtung ist ein sogenannter Dreipunkt-Kraftheber, welcher üblicherweise heckseitig an einer landwirtschaftlichen Arbeitsmaschine angeordnet ist. An diesem Dreipunkt-Kraftheber können beispielsweise Arbeitsgeräte zur Bodenbearbeitung wie ein Pflug, eine Egge oder ein Grubber angehängt werden. Das Arbeitsgerät kann dabei mittels hydraulischen Hubzylindern angehoben und in seiner Höhenlage innerhalb bestimmter Grenzen, beispielsweise zwischen einer Transportposition und einer Arbeitsposition, bewegt werden.

Aus der EP 1 068 780 A1 ist ein Kraftfahrzeug, insbesondere ein Ackerschlepper, für landwirtschaftliche Arbeiten bekannt, welches eine Anbauschnittstelle mit einem Dreipunkt-Geräteanbau aufweist, wobei die Anbauschnittstelle an der Fahrzeugrückseite oder der Fahrzeugvorderseite angeordnet sein kann. An dem Fahrzeugchassis ist dabei ein um eine im Wesentlichen horizontal angeordnete Achse verschwenkbarer Ausleger befestigt, an dessen freiem Endbereich die Unterlenker des Dreipunkt-Geräteanbaus angelenkt sind. Zudem ist an dem Ausleger unmittelbar oder mittelbar ein ausfahrbarer Oberlenker angeordnet. Durch die spezielle Ausgestaltung der Anbauschnittstelle wird deren Funktionalität insbesondere durch einen größeren Hubbereich erhöht. Nachteilig ist allerdings, dass es bei einer heckseitigen Aufnahme eines schweren Arbeitsgerätes, dessen Einsatz eine große Zugkraft erfordert, zu einer Veränderung der Achslasten der Vorder- und Hinterachse des Zugfahrzeuges kommt, wobei insbesondere die Vorderachse des Zugfahrzeuges entlastet werden kann. Dieser Entlastung der Vorderachse kann zur Sicherstellung einer hinreichend großen Übertragung der Zugkraft auf den Boden auch bei ungünstigen Bodenverhältnissen zumindest zum Teil durch eine entsprechende Ballastierung der Vorderachse der landwirtschaftlichen Arbeitsmaschine, also anbringen zusätzlicher Gewichte, entgegengewirkt werden. Dies hat jedoch neben einem erhöhten Arbeitsaufwand den Nachteil, dass das Gewicht der landwirtschaftlichen Arbeitsmaschine steigt und der Kraftstoffverbrauch ebenfalls zunimmt.

Es ist daher die Aufgabe der Erfindung, eine landwirtschaftliche Arbeitsmaschine bereitzustellen, welche eine verbesserte Regelung der Achslastverteilung ermöglicht. Weiterhin ist es die Aufgabe der Erfindung, ein Verfahren anzugeben, dass eine verbesserte Regelung der Achslastverteilung bei einer landwirtschaftlichen Arbeitsmaschine ermöglicht.

Die Aufgabe wird erfindungsgemäß durch die kennzeichnenden Merkmale der unabhängigen Patentansprüche 1 und 10 gelöst. Vorteilhafte Ausgestaltungen und Weiterbildungen der Erfindung ergeben sich aus den nachstehenden Unteransprüchen und den nachfolgenden Beschreibungen.

Eine landwirtschaftliche Arbeitsmaschine mit mindestens zwei Fahrzeugachsen, mindestens einer vertikal verlagerbar ausgebildeten Anhängevorrichtung, einem an der Anhängevorrichtung angehängten Arbeitsgerät, und einer Steuervorrichtung, wobei erfindungsgemäß die Steuervorrichtung derart ausgebildet und eingerichtet ist, dass an den Fahrzeugachsen wirkende Achslasten und/oder Drehmomente ermittelbar sind, und dass zur Regelung einer Achslastverteilung der Arbeitsmaschine eine vertikale Verlagerung der Anhängevorrichtung abhängig von den ermittelten Achslasten und/oder Drehmomenten dynamisch regelbar ist.

Durch die dynamische vertikale Verlagerung der Anhängevorrichtung wird die auf die Arbeitsmaschine wirkende Stützlast und/oder Zuglast des angehängten Arbeitsgerätes beeinflusst, wodurch die auf die einzelnen Achsen der Arbeitsmaschine wirkenden Achskräfte und/oder Drehmomente veränderbar sind. Dies bietet den Vorteil, dass bei einer von der Steuervorrichtung ermittelten ungleichen Achslastverteilung und/oder Drehmomentverteilung eine dynamische Anpassung der Achslastverteilung während des Betriebes der Arbeitsmaschine vorgenommen werden kann. Durch die dynamische Regelung der Achslastverteilung der landwirtschaftlichen Arbeitsmaschine kann die Regelung der Achslastverteilung dahingehend verbessert werden, dass dynamisch, also während des Betriebs der Arbeitsmaschine, eine regelbare, optimierte Achslastverteilung des Arbeitsfahrzeuges eingestellt werden kann. Dies hat den Vorteil, dass auch bei schwierigen und insbesondere bei inhomogenen Bodenverhältnissen eine sichere Übertragung der Zugkraft auf den Boden, insbesondere durch mindestens eine angetriebene Achse, sichergestellt werden kann. Besonders bei einer allradgetriebenen Arbeitsmaschine kann so eine ausgewogene Zugkraftverteilung durch die dynamische Regelung der Achslastverteilung auf die angetriebenen Achsen ermöglicht werden. Zudem können eine unnötige Ballastierung der Arbeitsmaschine sowie ein aus der Gewichtserhöhung resultierender höherer Kraftstoffverbrauch vermieden werden.

Nach der Erfindung ist die Anhängevorrichtung linear entlang einer im Wesentlichen vertikal angeordneten Verschiebeachse dynamisch, also während des Betriebs der Arbeitsmaschine, verlagerbar ausgebildet. Eine im Wesentlichen lineare vertikale Verlagerung der Anhängevorrichtung hat den Vorteil, dass der von der entsprechend ausgebildeten Anhängevorrichtung benötigte Bauraum sich im Wesentlichen in vertikaler Richtung erstreckt und so geringer ausfällt, als eine herkömmliche Anhängevorrichtung mit Verstellmöglichkeiten in horizontaler Richtung.

Vorteilhafterweise ist an jeder, insbesondere angetriebenen, Achse mindestens ein mit der Steuervorrichtung verbundener Achslastsensor und/oder Drehmomentsensor zur Messung der Achslast und/oder eines dort wirkenden Drehmomentes vorgesehen. Durch die Anordnung eines Achslastsensors an einer Achse kann die tatsächlich an dieser Achse wirkende Achslast gemessen werden und so auch die Verteilung der Achslasten an den angetriebenen und/oder unangetriebenen Achsen der Arbeitsmaschine ermittelt werden. Weiterhin ist dabei vorteilhaft, dass nicht nur eine statische Achslast, beispielsweise bei einem stehenden Arbeitsgerät, ermittelt werden kann, sondern auch Schwankungen und Veränderungen der einzelnen Achslasten und ihrer Verteilung während des Betriebs der Arbeitsmaschine. Die Anordnung eines Drehmomentsensors an einer angetriebenen Achse hat den Vorteil, dass ein an der jeweilige Achse wirkendes Drehmoment direkt erfasst werden kann. Aus den erfassten Drehmomenten an mehreren Achsen kann die Drehmomentverteilung ermittelt werden, die ein Maß für die je Achse übertragene und/oder übertragbare Zugkraft darstellt und beispielsweise bei unterschiedlichen übertragbaren Drehmomenten je Achse einen Rückschluss auf die Achslastverteilung zulässt, wobei aus einem geringeren übertragbaren Drehmoment einer Achse auf eine geringere Achslast dieser Achse beispielsweise im Vergleich zu einer anderen geschlossen werden kann. Dies ermöglicht es, eine vertikale Verlagerung der Anhängevorrichtung zur Regelung der Achslastverteilung in Abhängigkeit der gemessenen Drehmomente vorzunehmen.

In einer weiteren Ausgestaltung der Erfindung ist ein durch die Steuervorrichtung regelbarer erster Aktor zur dynamischen, vertikalen Verlagerung der Anhängevorrichtung vorgesehen, wobei der erste Aktor hydraulisch, elektrisch und/oder mechanisch wirkend ausgebildet ist. Der erste Aktor zur vertikalen Verlagerung der Anhängevorrichtung kann entsprechend der Arbeitsmaschine und den vorhandenen Energiequellen, beispielsweise einer Hydraulik oder Elektrik, und den Anbaumöglichkeiten sowie den zu erwartenden Stützlasten und/oder Zuglasten ausgewählt werden.

In einer besonders vorteilhaften Ausgestaltung der Erfindung ist das angehängte Arbeitsgerät derart ausgebildet und eingerichtet, dass eine von dem Arbeitsgerät auf die Anhängevorrichtung wirkende Stützlast in Abhängigkeit der Achslasten dynamisch regelbar ist. Dies hat den Vorteil, dass die zur dynamischen Regelung der Achslastverteilung nutzbare und die Achslastverteilung beeinflussende, vertikal an der Anhängevorrichtung wirkende Stützlast, weiter vergrößert kann. Besonders vorteilhaft ist, dass das angehängte Arbeitsgerät zur dynamischen Regelung der Stützlast einen durch die Steuervorrichtung dynamisch regelbaren zweiten Aktor aufweist. Dieser zweite Aktor kann beispielsweise auf eine an die Anhängevorrichtung angehängte Deichsel, insbesondere Gelenkdeichsel, des Arbeitsgerätes wirken, wodurch zumindest eine teilweise Verlagerung des Gewichtes des Arbeitsgerätes über die Deichsel auf die Anhängevorrichtung bewirkt werden kann, wodurch die Stützlast weiter vergrößert werden kann.

Bei einer Anhängevorrichtung, bei der bauartbedingt nur ein geringer Schwenkbereich des angehängten Arbeitsgerätes möglich ist, kann die Anhängevorrichtung vorteilhafterweise horizontal neigbar und/oder verschwenkbar ausgebildet sein. Dies hat den Vorteil, dass beispielsweise bei einer Bodenwelle, der Zugwinkel zwischen der Anhängevorrichtung und dem Arbeitsgerät im Wesentlichen unverändert bleibt.

Vorteilhafterweis ist die vertikal verlagerbare Anhängevorrichtung zum Anhängen eines Arbeitsgerätes in Form eines entsprechend ausgebildeten Dreipunkt-Krafthebers, eines Zughakens, eines Zugpendels, oder einer Kugelkopfkupplung ausgebildet. Dies hat den Vorteil, dass Arbeitsgeräte mit gebräuchlichen und standarisierten Anhängevorrichtungen ohne besondere Adapter oder Mehraufwand an die Anhängevorrichtung angehängt werden können.

In einer weiteren vorteilhaften Ausgestaltung ist jeweils eine Anhängevorrichtung frontseitig und/oder heckseitig an der landwirtschaftlichen Arbeitsmaschine angeordnet. Durch die frontseitige, heckseitige oder beidseitige Anordnung einer Anbauvorrichtung an der landwirtschaftlichen Arbeitsmaschine kann die Anzahl an nutzbaren Arbeitsgeräten für die Regelung der Achslastverteilung vergrößert werden.

Weiterhin betrifft die Erfindung ein Verfahren zur Regelung einer Achslastverteilung einer landwirtschaftlichen Arbeitsmaschine, für eine Arbeitsmaschine mit mindestens zwei Fahrzeugachsen, mindestens einer vertikal verlagerbar ausgebildeten Anhängevorrichtung und einem an der Anhängevorrichtung angehängten Arbeitsgerät. Erfindungsgemäß werden an den Fahrzeugachsen wirkende Achslasten und/oder Drehmomente gemessen, und zur Regelung der Achslastverteilung der Arbeitsmaschine wird eine vertikale Verlagerung der Anhängevorrichtung abhängig von den ermittelten Achslasten und/oder Drehmomenten dynamisch geregelt.

Dies hat den Vorteil, dass durch die dynamische vertikale Verlagerung der Anhängevorrichtung die auf die Arbeitsmaschine wirkende Stützlast und/oder Zuglast des angehängten Arbeitsgerätes beeinflusst, wodurch die auf die einzelnen Achsen der Arbeitsmaschine wirkenden Achskräfte und/oder Drehmomente veränderbar sind. Dies bietet den Vorteil, dass bei einer von der Steuervorrichtung ermittelten ungleichen oder ungünstigen Achslastverteilung, die beispielsweise eine nicht hinreichende Zugkraftübertragung bewirkt, eine dynamische Anpassung der Achslastverteilung während des Betriebes der Arbeitsmaschine vorgenommen werden kann, um eine Achslastverteilung für eine größtmögliche Zugkraftübertragung einzustellen. Durch die dynamische Regelung der Achslastverteilung der landwirtschaftlichen Arbeitsmaschine kann die Regelung der Achslastverteilung dahingehend verbessert werden, dass dynamisch, also während des Betriebs der Arbeitsmaschine, eine regelbare optimierte Achslastverteilung des Arbeitsfahrzeuges eingestellt werden kann. Dies hat den Vorteil, dass auch bei schwierigen und insbesondere bei inhomogenen Bodenverhältnissen eine sichere und größtmögliche Übertragung der Zugkraft auf den Boden sichergestellt werden kann. Besonders bei einer allradgetriebenen Arbeitsmaschine kann so eine ausgewogene Zugkraftverteilung durch die dynamische Regelung der Achslastverteilung ermöglicht werden. Zudem kann eine unnötige Ballastierung der Arbeitsmaschine und somit eine unnötige Gewichtserhöhung und Kraftstoffverbrauch vermieden werden.

Nach der Erfindung wird das an der Anhängevorrichtung angehängte Arbeitsgerät von einer Transportposition in eine Betriebsposition verbracht, wobei in der Betriebsposition die Anhängevorrichtung zur Regelung der Achslastverteilung dynamisch vertikal verlagert wird. Durch die vertikale Verlagerung der Anhängevorrichtung in der Betriebsposition des Arbeitsgerätes kann auch während der Bodenbearbeitung, insbesondere bei inhomogenen Bodenverhältnissen die zu einer schwankenden Zuglast führen, eine verbesserte Übertragung der Zugkraft der Arbeitsmaschine auf den Boden durch eine dynamische Anpassung der Achslastverteilung sichergestellt werden.

Besonders vorteilhaft ist, dass die Steuervorrichtung eine verbesserte statische Ballastierung der landwirtschaftlichen Arbeitsmaschine ermittelt und/oder anzeigt. Dies kann besonders dann von Vorteil sein, falls die angestrebte, beispielsweise gleichmäßige, Achslastverteilung auch mit der dynamischen Regelung mittels der vertikal verlagerbaren Anhängevorrichtung nicht einstellbar ist. Die Steuervorrichtung kann dann eine verbesserte Ballastierung der Arbeitsmaschine ermitteln, die ein dynamisches Einstellen des angestrebten Achslastverhältnisses ermöglicht. Hierbei kann eine Anzahl der Gewichte der Ballastierung sowie deren Anordnung an der Arbeitsmaschine verändert werden.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Seitenansicht einer landwirtschaftlichen Arbeitsmaschine mit einem angehängten Arbeitsgerät; und
- Fig. 2:: eine schematische Seitenansicht der landwirtschaftlichen Arbeitsmaschine aus Fig. 1 mit einem Arbeitsgerät mit veränderbarer Stützlast.

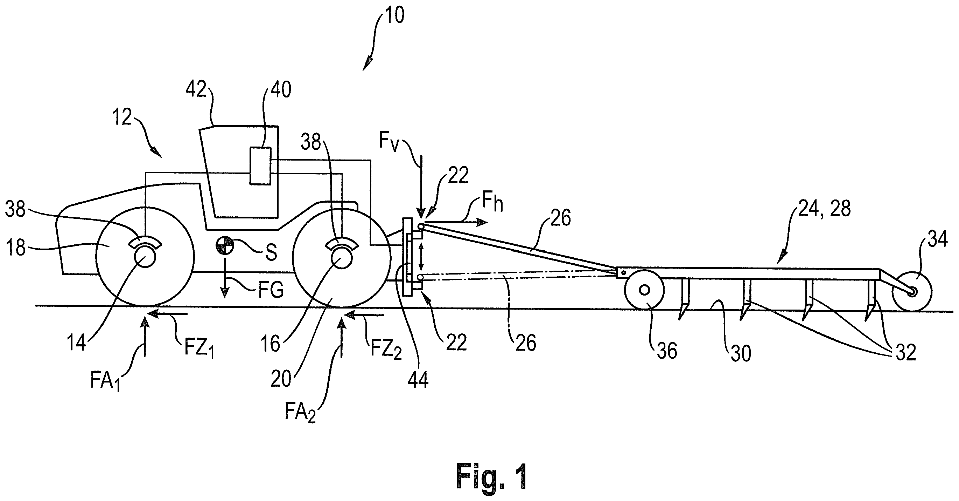

In Figur 1 ist als Beispiel für eine landwirtschaftliche Arbeitsmaschine 10 ein Traktor 12 in einer schematischen Seitenansicht dargestellt. Eine landwirtschaftliche Arbeitsmaschine 10 im Sinne der Erfindung kann dabei jede Arbeitsmaschine 10 sein, welche ein angehängtes Arbeitsgerät 24 aufweist und insbesondere zur Bearbeitung eines Feldes eingesetzt werden kann. Eine Arbeitsmaschine 10 kann zwei oder mehrachsig ausgebildet. Der dargestellte Traktor 12 weist eine Vorderachse 14 und eine Hinterachse 16 auf, wobei an der Vorderachse 14 Vorderräder 18 und an einer Hinterachse 16 Hinterräder 20 angeordnet sind. Heckseitig weist der Traktor 12 eine Anhängevorrichtung 22 auf, an welcher das Arbeitsgerät 24 mittels einer verschwenkbaren Deichsel 26, einer sogenannten Gelenkdeichsel, an den Traktor 12 angehängt ist. Ein Arbeitsgerät 24 kann jedes an die Arbeitsmaschine 10 zur Durchführung einer Arbeit angehängte Mittel sein, beispielsweise ein Transportanhänger, oder ein Gerät zur Bodenbearbeitung. Das in Figur 1 dargestellte Arbeitsgerät 24 ist ein sogenannter Grubber 28 zur mechanischen Bearbeitung eines Bodens 30 auf einem Feld. Der Grubber 28 weist zur Bearbeitung des Bodens 30 eine Mehrzahl von Zinken 32 auf, welche in der dargestellten Betriebsposition des Arbeitsgerätes 24 im Eingriff mit dem Boden 30 stehen. Zur weiteren Bearbeitung des Bodens 30 weist das Arbeitsgerät 24 in Arbeitsrichtung hinter den Zinken 30 angeordnet eine Walze 34 auf, welche eine Rückverfestigung des Bodens 30 bewirkt. Anhängevorrichtungsseitig weist das Arbeitsgerät 24 ein Stützrad 36 auf, welches zusammen mit der Walze 34 zumindest einen Teil des Gewichtes des Grubber 28 trägt und über dessen Einstellung eine Eindringtiefe der Zinken 32 in den Boden 30 einstellbar ist.

Erfindungsgemäß sind die auf die Vorderachse 14 und die Hinterachse 16 der landwirtschaftlichen Arbeitsmaschine 10 wirkenden Achslasten FA_{1,2} ermittelbar. Dabei wirkt an der Vorderachse 14 die Achslast FA₁ und an der Hinterachse 16 die Achslast FA₂. Die Achslasten FA_{1,2} können dabei mittels an den jeweiligen Achsen 14,16 angeordneten Achslastsensoren 38 ermittelt werden, wobei die Achslastsensoren 38 mit einer Steuervorrichtung 40 verbunden sind, welche beispielsweise in einer Fahrerkabine 42 angeordnet sein kann. Die statischen Achslasten können beispielsweise nach einem Anhängen des Arbeitsgerätes 24 an die Arbeitsmaschine 10 ermittelt werden, so dass eine Ballastierung der landwirtschaftlichen Arbeitsmaschine 10 mittels zusätzlichen Gewichten vorgenommen werden kann, durch die weitestgehend eine günstige, zumindest statische, Achslastverteilung an den Achsen 16,18 der Arbeitsmaschine 10 einstellbar ist. Die statischen Achslasten können basierend auf dem in einem Schwerpunkt S wirkenden Gesamtgewicht FG der landwirtschaftlichen Arbeitsmaschine 10 einschließlich zusätzlich angebrachter Gewichte sowie einer vertikalen Komponente der an der Anhängevorrichtung 22 wirkenden Stützlast Fv des angehängten Arbeitsgerätes 24 und der Anzahl der Achsen 16,18 der Arbeitsmaschine 10 ermittelt werden.

Eine auf den Boden übertragbare Zugkraft FZ der landwirtschaftlichen Arbeitsmaschine 10 ist abhängig von den jeweils auf die angetriebenen Vorderräder 18 und Hinterräder 20 wirkenden Achslasten FA₁, FA₂, wobei mit steigenden Achslasten FA₁, FA₂ die über die jeweiligen Räder 18,20 auf den Boden 30 übertragbaren Zugkräfte FZ_{1,2} der landwirtschaftlichen Arbeitsmaschine 10 größer werden. Die erforderliche Zugkraft FZ der landwirtschaftlichen Arbeitsmaschine 10 berücksichtigt neben der in horizontaler Richtung an der Anhängevorrichtung 22 wirkenden Zuglast Fh einen Rollwiderstand der Arbeitsmaschine 10. Um eine größtmögliche Übertragung der Zugkraft FZ_{1,2} der Arbeitsmaschine 10 auf den Boden 30 zu erreichen, ist eine Aufteilung der benötigten Zugkraft FZ_{1,2} entsprechend der Komponenten des Antriebstrangs auf die einzelnen Achsen 16,18 erstrebenswert, was durch ein entsprechende Regeln der auf die Achsen 16,18 wirkenden Achslasten FA_{1,2} erreicht werden kann. So kann beispielsweise bei zwei gleichstark angetriebenen Achsen 16,18 eine gleichmäßige Verteilung der Achslasten FA_{1,2} auf die Vorderachse 16 und die Hinterachse 18 die größtmögliche Übertragung der Zugkraft FZ_{1,2} der Arbeitsmaschine 10 auf den Boden 30 ermöglichen.

Die zum Ziehen des angehängten Arbeitsgerätes 24 benötigte Zuglast Fh kann während des Betriebes der Arbeitsmaschine 10 schwanken, da diese unter anderem von veränderlichen Bodenverhältnissen, dem Zustand der Arbeitswerkzeuge wie den Zinken 32, einer mitgeführten Betriebsmittelmenge, und/oder der Fahrgeschwindigkeit abhängig ist. Zudem wird die benötigte Zugkraft FZ der landwirtschaftlichen Arbeitsmaschine 10 durch die Topografie des befahrenen Bodens beeinflusst. Diese im Betrieb der Arbeitsmaschine 10 und des Arbeitsgerätes 24 schwankende Zuglast Fh führt zu einer Veränderung der Achslastverteilung, von einer möglicherweise optimalen hin zu einer ungünstigeren mit einer verminderten Zugkraftübertragung.

Um eine möglichst gleichbleibend optimale, und insbesondere gleichmäßige, Verteilung der Achslasten FA_{1,2} zu ermöglichen, ist die Achslastverteilung dynamisch, also während des Betriebes der landwirtschaftlichen Arbeitsmaschine 10 und/oder des Arbeitsgerätes 24, insbesondere kontinuierlich und/oder in Intervallen, regelbar. Dafür ist die Anhängevorrichtung 22 zumindest vertikal verlagerbar ausgebildet, wobei eine vertikale Verlagerung der Anhängevorrichtung 22 abhängig von den ermittelten Achslasten FA_{1,2} dynamisch regelbar ist. So weist die Anhängevorrichtung 22 einen mit der Steuervorrichtung 40 verbunden und durch diese regelbaren ersten Aktor 44 zur vertikalen Verlagerung der Anhängevorrichtung 22 auf. Der erste Aktor 44 kann beispielsweise ein durch die Steuervorrichtung 40 regelbarer Hydraulikzylinder, Spindeltrieb oder Linearmotor sein. Die vertikal verlagerbare Anhängevorrichtung 22 kann beispielsweise in Form eines entsprechend ausgebildeten Dreipunkt-Krafthebers, eines Zughakens, eines Zugpendels, oder einer Kugelkopfkupplung, oder einer anderen, zur zumindest Zugkraftübertragung geeigneten Form ausgebildet sein, wobei entsprechend ausgebildet im Sinne der Erfindung so zu verstehen ist, dass die jeweilige Anhängevorrichtung 22 derart aus- und weitergebildet ist, dass eine erfindungsgemäße dynamische, vertikale Verlagerung mit einem daran angehängten Arbeitsgerät 24 durchführbar ist.

Um die dynamische Regelung der Achslastverteilung zu ermöglichen, ist die Anhängevorrichtung 22 in einer Betriebsposition des Arbeitsgerätes 24 durch den ersten Aktor 44 zwischen einer oberen und einer unteren Position dynamisch verlagerbar. Dadurch kann unter anderem eine Veränderung der an der Anhängevorrichtung 22 wirkenden vertikalen Stützlast Fv bewirkt werden, wodurch die auf die Achsen 16,18 wirkenden Achslasten FA_{1,2} und deren Verteilung beeinflusst werden können. In Figur 1 ist die Anhängevorrichtung 22 mit der daran angeordneten Deichsel 26 des Grubbers 28 in der oberen Position dargestellt, wobei durch den so eingestellten Zugwinkel der Deichsel 26 die vertikale Komponente der Stützlast Fv maximiert wird. Die gestrichelt dargestellt Deichsel 26 ist an der in ihrer unteren Position angeordneten Anhängevorrichtung 22 angehängt, wodurch im Wesentlichen nur die horizontale Zuglast Fh auf die Anhängevorrichtung 22 wirkt. Dadurch wird die Hinterachse 18 und die dort wirkende Achslast FA₂ um die vertikale Stützlast Fv entlastet, wodurch die Achslastverteilung zu der Vorderachse 16 hin verlagert werden kann. Falls mit der dynamischen Regelung der Achslastverteilung nicht die günstigste, insbesondere gleichmäßige, Verteilung der Achslasten FA_{1,2} erreicht werden kann, kann durch die Steuervorrichtung 40 eine entsprechend verbesserte Ballastierung ermittelt und/oder einem Bediener der Arbeitsmaschine 10 angezeigt werden. Um einen Zugwinkel zwischen dem Arbeitsgerät 24, beispielsweise der Deichsel 26, und der Anhängevorrichtung 22 im Wesentlichen konstant zu halten, kann die Anhängevorrichtung 22 in der horizontalen neigbar und/oder verschwenkbar ausgebildet sein. Dies hat den Vorteil, dass besonders bei einer Anhängevorrichtung 22, bei welcher nur eine geringe Veränderung des Zugwinkels zulässig ist, Beschädigungen vermieden werden können.

Zusätzlich oder alternativ zu Achslastsensoren 38 kann eine aktuelle Belastung der Achsen 16,18 mittels einer Drehmomentmessung gemessen werden. Hierbei können die, von einem Antriebsmotor (nicht dargestellt) über einen Antriebsstrang an den Achsen 16,18 bereitgestellte Momente, welche über die Räder 18,20, oder Bandlaufwerke, als Zugkraft FZ zur Verfügung gestellt werden, mittels an den Achsen 16,18 angeordneten Drehmomentsensoren (nicht dargestellt) gemessen werden. Hierbei kann eine vertikale Position der Anhängevorrichtung 22 basierend auf den gemessenen Drehmomenten durch die Steuervorrichtung 40 dynamisch geregelt werden, wodurch die Achslasten FA_{1,2} dynamisch regelbar sind.

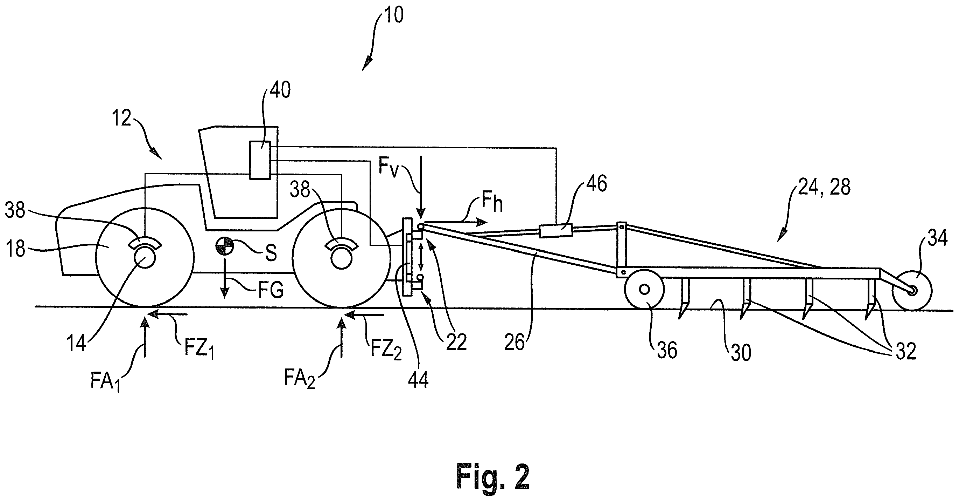

Die in Figur 2 dargestellte landwirtschaftliche Arbeitsmaschine 10 in Form eines Traktors 12 weist ein Arbeitsgerät 24 in Form eines Grubbers 28 auf. Der Grubber 28 ist über eine Deichsel 26 mit der Anhängevorrichtung 22 verbunden, welche in die obere Position verbracht ist. Der Grubber 28 weist an seiner Oberseite einen mit der Steuervorrichtung 40 verbundenen und durch diesen dynamisch regelbaren zweiten Aktor 46 beispielsweise in Form eines Hydraulikzylinders auf, welcher auf die Deichsel 26 wirkt und derart ausgebildet und angeordnet ist, dass durch eine Betätigung die auf die Anhängevorrichtung 22 wirkende vertikale Stützlast Fv veränderbar ist. Bei einer Betätigung des zweiten Aktors 46 kann das arbeitsmaschinenseitige Stützrad 36 des Grubbers 28 zumindest teilweise entlastet werden, wodurch ein größerer Anteil des Gewichtes des Grubbers 28 auf der Anhängevorrichtung 22 abgestützt wird, wodurch die vertikale Stützlast Fv weiter erhöht werden kann. Durch eine umgekehrte Betätigung des zweiten Aktors 46 kann die Anhängevorrichtung 22 in vertikaler Richtung entlastet werden, wodurch die Stützlast Fv reduziert werden kann. Durch die dynamische Veränderung der an der Anhängevorrichtung 22 wirkenden vertikalen Stützlast Fv kann die Achslastverteilung dynamisch an sich verändernde Einflüsse angepasst werden.

### Bezugszeichenliste

- 10: landwirtschaftliche Arbeitsmaschine
- 12: Traktor
- 14: Vorderachse
- 16: Hinterachse
- 18: Vorderrad
- 20: Hinterrad
- 22: Anhängevorrichtung
- 24: Arbeitsgerät
- 26: Deichsel
- 28: Grubber
- 30: Boden
- 32: Zinken
- 34: Walze
- 36: Stützrad
- 38: Achslastsensor
- 40: Steuervorrichtung
- 42: Fahrerkabine
- 44: erster Aktor
- 46: zweiter Aktor

- FA_{1,2}: Achslast
- S: Schwerpunkt
- FG: Gesamtgewicht
- FZ_{1,2}: Zugkraft
- Fv: Stützlast
- Fh: Zuglast

## Patentansprüche

1. Landwirtschaftliche Arbeitsmaschine mit mindestens zwei Fahrzeugachsen (14,16), mindestens einer vertikal verlagerbar ausgebildeten Anhängevorrichtung (22), einem an der Anhängevorrichtung (22) angehängten Arbeitsgerät (24), und einer Steuervorrichtung (40),
**dadurch gekennzeichnet, dass**
die Steuervorrichtung (40) derart ausgebildet und eingerichtet ist, dass an den Fahrzeugachsen (14,16) wirkende Achslasten (FA_{1,2}) und/oder Drehmomente ermittelbar sind, und dass zur Regelung einer Achslastverteilung der Arbeitsmaschine (10) eine vertikale Verlagerung der Anhängevorrichtung (22) abhängig von den ermittelten Achslasten (FA_{1,2}) und/oder Drehmomenten dynamisch regelbar ist, wobei die Anhängevorrichtung (22) linear entlang einer im Wesentlichen vertikal angeordneten Verschiebeachse dynamisch, während des Betriebs der Arbeitsmaschine (10), verlagerbar ausgebildet ist.

2. Landwirtschaftliche Arbeitsmaschine nach Anspruch 1, **dadurch gekennzeichnet, dass** an jeder, insbesondere angetriebenen, Achse (14,16) mindestens ein mit der Steuervorrichtung (40) verbundener Achslastsensor (38) und/oder Drehmomentsensor zur Messung der Achslast (FA_{1,2}) und/oder eines dort wirkenden Drehmomentes vorgesehen ist.

3. Landwirtschaftliche Arbeitsmaschine nach Anspruch 1 oder 2, **dadurch gekennzeichnet, dass** ein durch die Steuervorrichtung (40) regelbarer erster Aktor (44) zur dynamischen, vertikalen Verlagerung der Anhängevorrichtung (22) vorgesehen ist, wobei der erste Aktor (44) hydraulisch, elektrisch und/oder mechanisch wirkend ausgebildet ist.

4. Landwirtschaftliche Arbeitsmaschine nach einem der vorherigen Ansprüche, **dadurch gekennzeichnet, dass** das angehängte Arbeitsgerät (24) derart ausgebildet und eingerichtet ist, dass eine von dem Arbeitsgerät (24) auf die Anhängevorrichtung (22) wirkende Stützlast (Fv) in Abhängigkeit der Achslasten (FA_{1,2}) dynamisch regelbar ist.

5. Landwirtschaftliche Arbeitsmaschine nach Anspruch 4, **dadurch gekennzeichnet, dass** das angehängte Arbeitsgerät (24) zur dynamischen Regelung der Stützlast (Fv) einen durch die Steuervorrichtung (40) dynamisch regelbaren zweiten Aktor (46) aufweist.

6. Landwirtschaftliche Arbeitsmaschine nach einem der vorherigen Ansprüche, **dadurch gekennzeichnet, dass** die Anhängevorrichtung (22) horizontal neigbar und/oder verschwenkbar ausgebildet ist.

7. Landwirtschaftliche Arbeitsmaschine nach einem der vorherigen Ansprüche, **dadurch gekennzeichnet, dass** die vertikal verlagerbare Anhängevorrichtung (22) zum Anhängen eines Arbeitsgerätes (24) in Form eines entsprechend ausgebildeten Dreipunkt-Krafthebers, eines Zughakens, eines Zugpendels, oder einer Kugelkopfkupplung ausgebildet ist.

8. Landwirtschaftliche Arbeitsmaschine nach einem der vorherigen Ansprüche, **dadurch gekennzeichnet, dass** jeweils eine Anhängevorrichtung (22) frontseitig und/oder heckseitig an der landwirtschaftlichen Arbeitsmaschine (10) angeordnet ist.

9. Verfahren zur Regelung einer Achslastverteilung einer landwirtschaftlichen Arbeitsmaschine, für eine Arbeitsmaschine (10) mit mindestens zwei Fahrzeug-achsen (14,16), mindestens einer vertikal verlagerbar ausgebildeten Anhängevorrichtung (22) und einem an der Anhängevorrichtung (20) angehängten Arbeitsgerät (24),
**dadurch gekennzeichnet, dass**
an den Fahrzeugachsen (14,16) wirkende Achslasten (FA_{1,2}) und/oder Drehmomente gemessen werden, und zur Regelung der Achslastverteilung der Arbeitsmaschine (10) eine vertikale Verlagerung der Anhängevorrichtung (22) abhängig von den ermittelten Achslasten (FA_{1,2}) und/oder Drehmomenten dynamisch geregelt wird, wobei das an der Anhängevorrichtung (22) angehängte Arbeitsgerät (24) von einer Transportposition in eine Betriebsposition verbracht wird, wobei in der Betriebsposition die Anhängevorrichtung (22) zur Regelung der Achslastverteilung dynamisch vertikal verlagert wird, und wobei die Anhängevorrichtung (22) linear entlang einer im Wesentlichen vertikal angeordneten Verschiebeachse dynamisch, während des Betriebs der Arbeitsmaschine (10), verlagert wird.

10. Verfahren nach Anspruch 9, **dadurch gekennzeichnet, dass** die Steuervorrichtung eine verbesserte statische Ballastierung der landwirtschaftlichen Arbeitsmaschine (10) ermittelt und/oder anzeigt.

## Claims

1. An agricultural working machine comprising at least two vehicle axles (14, 16), at least one vertically displaceable hitch device (22), a working implement (24) hitched to the hitch device (22), and a control device (40),
**characterised in that**
the control device (40) is designed and adapted such that axle loads (FA_{1, 2}) and/or torques acting at the vehicle axles (14, 16) can be determined, and that to regulate an axle load distribution of the working machine (10) vertical displacement of the hitch device (22) can be dynamically regulated in dependence on the determined axle loads (FA_{1, 2}) and/or torques, wherein the hitch device (22) is adapted to be displaceable linearly along a substantially vertically arranged displacement axis dynamically during operation of the working machine (10).

2. An agricultural working machine according to claim 1 **characterised in that** provided at each, in particular driven, axle (14, 16) is at least one axle load sensor (38) and/or torque sensor connected to the control device (40) for measuring the axle load (FA_{1, 2}) and/or a torque acting thereat.

3. An agricultural working machine according to claim 1 or claim 2 **characterised in that** there is provided a first actuator (44) regulatable by the control device (40) for dynamic vertical displacement of the hitch device (22), wherein the first actuator (44) is adapted to act hydraulically, electrically and/or mechanically.

4. An agricultural working machine according to one of the preceding claims **characterised in that** the hitched working implement (24) is so designed and adapted that a support load (Fv) acting from the working implement (24) on the hitch device (22) is dynamically regulatable in dependence on the axle loads (FA_{1, 2}).

5. An agricultural working machine according to claim 4 **characterised in that** the hitched working implement (14) for dynamic regulation of the support load (Fv) has a second actuator (46) which is dynamically regulatable by the control device (40).

6. An agricultural working machine according to one of the preceding claims **characterised in that** the hitch device (22) is adapted to be horizontally inclinable and/or pivotable.

7. An agricultural working machine according to one of the preceding claims **characterised in that** the vertically displaceable hitch device (22) for hitching a working implement (24) is in the form of a suitably designed three-point power lift, a towing hook, a drawbar or a ball-head coupling.

8. An agricultural working machine according to one of the preceding claims **characterised in that** a respective hitch device (22) is arranged at the front end and/or the rear end on the agricultural working machine (10).

9. An method of regulating an axle load distribution of an agricultural working machine, for a working machine (10) having at least two vehicle axles (14, 16), at least one vertically displaceable hitch device (22) and a working implement (24) hitched to the hitch device (20), **characterised in that** axle loads (FA_{1, 2}) and/or torques acting at the vehicle axles (14, 16) are measured and to regulate the axle load distribution of the working machine (10) vertical displacement of the hitch device (22) is regulated dynamically in dependence on the determined axle loads (FA_{1, 2}) and/or torques, wherein the working implement (24) hitched to the hitch device (22) is moved from a transport position into an operative position, wherein in the operative position the hitch device (22) is dynamically vertically displaced to regulate the axle load distribution and wherein the hitch device (22) is displaced linearly along a substantially vertically arranged displacement line dynamically during operation of the working machine (10).

10. A method according to claim 9 **characterised in that** the control device ascertains and/or displays an improved static ballasting of the agricultural working machine (10).

## Revendications

1. Machine de travail agricole comprenant au moins deux essieux de véhicule (14, 16), au moins un dispositif d'attelage (22) conçu de manière déplaçable verticalement, un outil de travail (24) attelé au dispositif d'attelage (22) et un dispositif de commande (40), **caractérisée en ce que** le dispositif de commande (40) est conçu et agencé de façon que des charges d'essieux (FA_{1,2}) et/ou des moments de rotation agissant au niveau des essieux de véhicule (14, 16) puissent être déterminés, et **en ce que**, pour réguler une répartition de charges d'essieux de la machine de travail (10), un déplacement vertical du dispositif d'attelage (22) soit régulable dynamiquement en fonction des charges d'essieux (FA_{1,2}) et/ou des moments de rotation déterminés, le dispositif d'attelage (22) étant conçu de façon déplaçable linéairement suivant un axe de translation disposé sensiblement verticalement, de façon dynamique pendant le fonctionnement de la machine de travail (10).

2. Machine de travail agricole selon la revendication 1, **caractérisée en ce que** sur chaque essieu, en particulier entraîné, (14, 16) est prévu au moins un capteur de charge d'essieu (38) et/ou capteur de moment de rotation relié au dispositif de commande (40) pour mesurer la charge d'essieu (FA_{1,2}) et/ou un moment de rotation agissant à cet endroit.

3. Machine de travail agricole selon la revendication 1 ou 2, **caractérisée en ce qu'**un premier actionneur (44) régulable par l'intermédiaire du dispositif de commande (40) est prévu pour le déplacement dynamique vertical du dispositif d'attelage (22), le premier actionneur (44) étant conçu à action hydraulique, électrique et/ou mécanique.

4. Machine de travail agricole selon une des revendications précédentes, **caractérisée en ce que** l'outil de travail attelé (24) est conçu et agencé de façon qu'une charge d'appui (F_{V}) agissant de l'outil de travail (24) sur le dispositif d'attelage (22) soit régulable dynamiquement en fonction des charges d'essieux (FA_{1,2}).

5. Machine de travail agricole selon la revendication 4, **caractérisée en ce que**, pour la régulation dynamique de la charge d'appui (F_{V}), l'outil de travail attelé (24) comporte un second actionneur (46) régulable dynamiquement par l'intermédiaire du dispositif de commande (40).

6. Machine de travail agricole selon une des revendications précédentes, **caractérisée en ce que** le dispositif d'attelage (22) est conçu de façon inclinable et/ou pivotante horizontalement.

7. Machine de travail agricole selon une des revendications précédentes, **caractérisée en ce que** le dispositif d'attelage déplaçable verticalement (22) est conçu pour atteler un outil de travail (24) en forme de relevage à trois points, de crochet de traction, de barre de traction oscillante ou d'accouplement à rotule.

8. Machine de travail agricole selon une des revendications précédentes, **caractérisée en ce qu'**un dispositif récepteur (22) est disposé respectivement à l'avant et/ou à l'arrière sur la machine de travail agricole (10).

9. Procédé de régulation d'une répartition de charges d'essieux d'une machine de travail agricole, pour une machine de travail (10) comprenant au moins deux essieux de véhicule (14, 16), au moins un dispositif d'attelage (22) conçu de manière déplaçable verticalement et un outil de travail (24) attelé au dispositif d'attelage (22), **caractérisé en ce que** des charges d'essieux (FA_{1,2}) et/ou des moments de rotation agissant sur les essieux de véhicule (14, 16) sont mesurés et, pour la régulation de la répartition de charges d'essieux de la machine de travail (10), un déplacement vertical du dispositif d'attelage (22) est régulé dynamiquement en fonction des charges d'essieux (FA_{1,2}) et/ou moments de rotation déterminés, l'outil de travail (24) attelé au dispositif d'attelage (22) étant amené d'une position de transport vers une position de fonctionnement, dans la position de fonctionnement le dispositif d'attelage (22) étant déplacé verticalement dynamiquement pour réguler la répartition de charges d'essieux, et le dispositif d'attelage (22) étant déplacé linéairement suivant un axe de translation disposé sensiblement verticalement, de façon dynamique pendant le fonctionnement de la machine de travail (10).

10. Procédé selon la revendication 9, **caractérisé en ce que** le dispositif de commande détermine et/ou affiche un ballastage statique amélioré de la machine de travail agricole (10).
